(19) Europäisches Patentamt
European Patent Office
Office européen des brevets

(11) EP 2 078 315 B1

(12) **EUROPEAN PATENT SPECIFICATION**

(45) Date of publication and mention of the grant of the patent:
**23.02.2011 Bulletin 2011/08**

(21) Application number: **07826906.5**

(22) Date of filing: **29.10.2007**

(51) Int Cl.:
***H01M 2/12*** *(2006.01)* ***H01M 2/04*** *(2006.01)*
***H01M 2/08*** *(2006.01)* ***H01M 6/08*** *(2006.01)*

(86) International application number:
**PCT/IB2007/054389**

(87) International publication number:
**WO 2008/053424 (08.05.2008 Gazette 2008/19)**

(54) **END CAP SEAL FOR AN ELECTROCHEMICAL CELL**

ENDKAPPENVERSIEGELUNGSVORRICHTUNG FÜR EINE ELEKTROCHEMISCHE ZELLE

CAPUCHON D'EXTRÉMITÉ ÉTANCHE POUR PILE ÉLECTROCHIMIQUE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **31.10.2006 US 590561**
**27.04.2007 US 796643**

(43) Date of publication of application:
**15.07.2009 Bulletin 2009/29**

(73) Proprietor: **The Gillette Company**
**Boston, MA 02199 (US)**

(72) Inventors:
- **ANGLIN, David, L.**
  **Brookfield, Connecticut 06804 (US)**
- **YOPPOLO, Robert, A.**
  **New Milford, Connecticut 06776 (US)**

(74) Representative: **Mather, Peter Geoffrey**
**NV Procter & Gamble Services Company SA**
**100 Temselaan**
**1853 Strombeek-Bever (BE)**

(56) References cited:
**WO-A-00/46864** **WO-A-2005/106991**
**US-A- 5 080 985** **US-B2- 6 887 614**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 078 315 B1

## Description

### FIELD OF THE INVENTION

The invention relates to an end cap assembly for sealing electrochemical cells, particularly alkaline cells. The invention relates to rupturable devices within the end cap assembly which allow gas to escape from the interior of the cell to the environment. The invention relates to rupturable devices comprised of polyetherurethane material.

### BACKGROUND

Conventional electrochemical cells, such as alkaline cells, are formed of a cylindrical housing having an open end and an end cap assembly inserted therein to seal the housing. Conventional alkaline cells typically comprise an anode comprising zinc, a cathode comprising manganese dioxide, and an alkaline electrolyte comprising aqueous potassium hydroxide. After the cell contents are supplied, the cell is closed by crimping the housing edge over the end cap assembly to provide a tight seal for the cell. The end cap assembly comprises an exposed end cap which functions as a cell terminal and typically a plastic insulating plug, which seals the open end of the cell housing. A problem associated with design of various electrochemical cells, particularly alkaline cells, is the tendency of the cell to produce gases as it continues to discharge beyond a certain point, normally near the point of complete exhaustion of the cell's useful capacity.

Electrochemical cells, particularly alkaline cells, may be provided with a rupturable venting mechanism which includes a rupturable diaphragm or rupturable membrane within an end cap assembly. The rupturable diaphragm or membrane may be formed within a plastic insulating member as described, for example, in U.S. Patent 3,617,386. Such diaphragms are designed to rupture when gas pressure within the cell exceeds a predetermined level. The end cap assembly may be provided with vent holes for the gas to escape when the diaphragm or membrane is ruptured. The end cap assembly disclosed in U.S. Patent 3,617,386 discloses a grooved rupturable seal diaphragm and a separate metal contact disk between the end cap and seal diaphragm. The end cap assembly disclosed in the reference is not designed to withstand radial compressive forces and will tend to leak when the cell is subjected to extremes in hot and cold climate.

In order to provide a tight seal contemporary prior art disclose end cap assemblies which include a metal support disk inserted between the end cap plate and an insulating member. The separate metal support disk may be radially compressed when the cell housing edge is crimped over the end cap assembly. The insulating plug is typically in the form of a plastic insulating disk which extends from the center of the cell towards the cell housing and electrically insulates the metal support disk from the cell housing. The metal support disk may have a highly convoluted surface as shown in U.S. patents 5,759,713 or 5,080,985 which assures that the end cap assembly can withstand high radial compressive forces during crimping of the cell's housing edge around the end cap assembly. This results in a tight mechanical seal around the end cap assembly at all times.

The prior art discloses rupturable vent membranes which are integrally formed as thinned areas within the insulating disk included within the end cap assembly. Such vent membranes are normally oriented such that they lie in a plane perpendicular to the cell's longitudinal axis, for example, as shown in U.S. patent 5,589,293. In U.S. patent 4,227,701 the rupturable membrane is formed of an annular "slit or groove" located in an arm of the insulating disk which is slanted in relation to the cell's longitudinal axis. The insulating disk is slideably mounted on an elongated current collector running therethrough. As gas pressure within the cells builds up the center portion of the insulating disk slides upwards towards the cell end cap, thereby stretching the thinned membrane "groove" until it ruptures. U.S. patents 6,127,062 and 6,887,614 B2 disclose an insulating sealing disk and an integrally formed rupturable membrane therein which is inclined. The rupturable membrane portion in the sealing disk abuts an aperture in the overlying metal support disk. When the gas pressure within the cell rises the membrane ruptures through the aperture in the metal support disk thereby releasing the gas pressure which passes to the external environment.

In U.S. patent 6,887,614 the rupturable membrane abuts an opening in an overlying metal support disk. In U.S. patent 6,887,614 there is an undercut groove on the underside of the membrane. The groove circumvents the cell's longitudinal axis. The groove creates a thinned membrane portion at its base which ruptures through the opening in the overlying metal support disk when the cell's internal gas pressure reaches a predetermined level. In the design shown in U.S. 6,887,614 there is an insulating washer which separates the exposed end cap from the cell housing. Such design has the disadvantage of requiring an additional component, namely, the insulating washer which needs to be inserted into the end cap assembly. The edge of the end cap sits over the cell housing shoulder and is separated from the housing by the washer. This allow.s for tampering of the end cap, that is, the end cap may be readily pried away from the cell allowing easier access to the cell contents.

The rupturable membrane can be in the form of one or more "islands" of thin material within the insulating sealing disk as shown in U.S. 4,537,841; U.S. U.S. 5,589,293; and U.S. 6,042,967. Alternatively, the rupturable membrane can be in the form of a thin portion circumventing the cell's longitudinal axis as shown in U.S. patent 5,080,985 and U.S

6,991,872. The circumventing thinned portion forming the rupturable membrane can be in the form of slits or grooves within the insulating disk as shown in U.S. patent 4,237,203 and U.S. 6,991,872. The rupturable membrane may also be a separate piece of polymeric film which is sandwiched between the metal support disk and the insulating disk and facing apertures therein as shown in Patent Application Publication US 2002/0127470 Al. A pointed or other protruding member can be oriented above the rupturable membrane to assist in rupture of the membrane as shown in U.S. patent 3,314,824. When gas pressure within the cell becomes excessive, the membrane expands and ruptures upon contact with the pointed member, thereby allowing gas from within the cell to escape to the environment through apertures in the overlying terminal end cap.

A separate metal support disk, typically with convoluted surfaces as shown in U.S. patents 5,080,985 and 5,759,713, has been included within the end cap assembly. The metal support disk provides support for the plastic insulating seal and withstands high radial compressive forces which may be applied to the end cap assembly during crimping of the housing edge around the end cap assembly. The high radial compressive force assures that the seal along the peripheral edge of the end cap assembly and cell housing can be maintained even if gas pressure within the cell builds up to high level, for example, over 1000 psig (689.4 x $10^4$ pascal gage).

In U.S. 4,537,841 is shown a plastic insulating sealing plug or disk for closing the open end of a cylindrical alkaline cell. There is a metal support disk over the insulating seal. The plastic insulating seal has a central hub and integrally formed radial arm which extends radially from the hub to the cell's casing wall. An "island" type rupturable membrane is formed integrally within the radially extending arm of the insulating seal. The "island" rupturable membrane is formed by stamping or compressing a portion of the radially extending arm of the insulating seal thereby forming a small circular thinned island portion, which is designed to rupture when gas pressure within the cell reaches a predetermined level. The island rupturable membrane shown in this reference is level with the radially extending arm of the insulating seal, that is, it is oriented in a plane perpendicular to the cell's central longitudinal axis. The top surface of the thinned rupturable membrane (facing the cell's open end) is very nearly level with the top surface of the radially extending insulating arm. This design while effective provides only a small limited space between the rupturable membrane and the metal support disk. When the cell is subjected to intentionally abusive conditions such as exposure to fire, this may result in very quick rise in cell internal temperature and gassing. It is possible under such extreme condition that the membrane may "balloon" out without rupturing because the membrane softens and there is only a small space between the membrane and the metal support disk.

WO 00/46864 describes a cylindrical alkaline cell including a housing and an annular seal member inserted at the open end of said housing, said seal member comprising nylon.

In view of improvements in gassing inhibitors and in particular the use of multiple gassing inhibitors, modern alkaline cells can be designed to vent at somewhat lower pressures than in the past. That is, there has been a trend towards lowering the design activation pressures for venting mechanisms in alkaline cells. Lower design vent activation pressures poses design challenges. If an "island" type rupturable membrane is used to trigger the venting mechanism, there are practical limitations as to how thin such membrane can be molded using conventional molding techniques such as injection molding. Also there are limitations on the amount of surface area available for such membranes depending on cell size. Also if conventional material such as nylon 66 is employed for the plastic insulating sealing plug it becomes more difficult to mold the thinned rupturable membrane portion of such material to the very small thicknesses required to accomplish the rupture at low pressure threshold. The small membrane thickness is required because of the high ultimate tensile strength of such material.

Accordingly, it is desirable to have an end cap assembly which provides a tight seal for the cell and resists leakage even though the cell may be exposed to extremes in both hot and cold climate.

It is desired to have a reliable rupturable venting mechanism within the end cap assembly which activates and functions properly even when the cell is subjected to abusive conditions.

It is desirable that the end cap be tamper proof, that is, cannot be readily pried from the end cap assembly.

It is desired that and rupturable venting mechanism be readily manufactured and reliable so that venting occurs at a specific predetermined pressure level.

## SUMMARY OF THE INVENTION

The invention is directed to an electrochemical cell, for example an alkaline cell, comprising an end cap seal assembly inserted into the open end of a cylindrical housing (casing) for the cell. In one aspect the end cap assembly comprises a metal support disk and an underlying insulating sealing plug (insulating sealing disk) underlying the metal disk when the cell is viewed in vertical position with the metal support disk on top. The end cap assembly also comprises a terminal end cap positioned over the metal support disk.

The metal support disk is preferably formed of a disk of single piece metallic construction having a convoluted surface and at least one vent aperture through its surface. The insulating sealing disk has a convoluted surface wherein a portion of its surface underlies the vent aperture in the metal support disk when the cell is viewed in vertical position

with the end cap assembly on top. The portion of said insulating sealing disk underlying said aperture has a groove on the inside surface thereof preferably facing the cell interior. The groove having an open end and opposing closed base wherein the base of the groove forms a thinned rupturable membrane. The rupturable membrane abuts the aperture in the metal support disk. When gas pressure within the cell rises said rupturable membrane penetrates through said aperture and ruptures thereby releasing gas directly into the surrounding environment through said aperture.

The insulating sealing disk comprises a plastic material having a downwardly extending wall slanted at an angle less than 90 degrees from the cell's central longitudinal axis and not parallel with said longitudinal axis. The downwardly extending wall of said insulating disk extends downwardly from a high point on the surface of the insulating disk and towards a lower point on its surface which is closer to the cell interior when the cell is viewed in vertical position with the end cap assembly on top. The metal support disk also has a downwardly extending wall slanted at an angle less than 90 degrees from the cell's central longitudinal axis. The downwardly extending wall of the metal support disk extends downwardly from a high point on the surface thereof when the cell is viewed in vertical position with the end cap assembly on top. There is at least one aperture in said downwardly extending wall of the metal support member against which the rupturable membrane abuts. Preferably the downwardly extending wall of the insulating sealing disk can be slanted at an angle of between about 35 and 80 degrees from the cell's central longitudinal axis. The downwardly extending wall of the overlying metal support disk is desirably slanted at the same angle, preferably an angle between about 35 and 80 degrees from the cell's central longitudinal axis, as the downwardly extending wall of the insulating sealing disk. This allows the rupturable membrane portion of the downwardly extending wall of the insulating sealing disk to abut and lie flush against the aperture in the downwardly extending wall of the metal support disk. The downwardly extending wall of the insulating sealing disk lies flush or nearly flush against the overlying downwardly extending wall of said metal support disk.

The groove on the inside surface of the downwardly extending wall of the insulating sealing disk forming the rupturable membrane portion is preferably made so that it circumvents the center of the insulating disk. At least the portion of such circumventing rupturable membrane abutting said aperture in the metal support disk ruptures when the cell pressure rises to a predetermined level. The rupturable membrane material for the insulating sealing disk comprises a polyetherurethane material, in particular a polytetramethyleneetherurethane material. Such polyetherurethane is a thermoplastic material with elastomeric characteristics. It is alkaline resistant and highly durable. The end cap assembly of the invention allows the vent aperture to be made larger because of the inclined orientation of the downwardly sloping arm of the metal support disk. The undercut groove in the rupturable membrane allows for thinner membrane at the rupture point, that is, at the base of the groove. This in turn allows for a reduction in design rupture pressures and accompanying small cell housing wall thickness, e.g. between about 4 and 12 mil (0.10 and 0.30 mm), thereby increasing the amount of cell internal volume available for active anode and cathode material. For example, the end cap assembly of the invention may allow for a cell housing wall thickness of between 4 and 8 mills (0.10 and 0.20 mm) for AA and AAA size cells and between about 10 and 12 mills (0.25 and 0.30 mm) for C and D size cells.

The insulating seal disk for the alkaline cell may be molded by injection molding to form insulating seal disk of a polyetherurethane material. The polyetherurethane material available under the PELLETHANE 2103 series from Dow Chemical Co. has been determined to be a preferred series of polyetherurethane material for alkaline cell sealing disk. The PELLETHANE 2103 series is a polyetherurethane comprising a tetramethyleneether repeat segment and is thus a polytetramethyleneetherurethane material. Such polyetherurethane can be formed from the reaction product of a polytetratnethyleneglycol and diisocyanate, thus forming a polytetramethyleneetherurethane material. The softness or hardness of the material may be controlled by the number of repeat polytetramethyleneether units in the glycol reactant. A preferred polyetherurethane for the insulating seal disk is available under the trade designation PELLETHANE 2103-80AE from. Dow Chemical Company. The PELLETHANE 2103-80AE polyetherurethane, which is a polytetramethyleneetherurethane material, has an ultimate tensile strength of 5000 psi (34.5 mega Pascal) and an ultimate elongation of 600 percent. The polyetherurethane class of material is chemically resistant to alkaline as is nylon. However, the polyetherurethane is a thermoplastic material with elastomeric properties (an elastomeric thermoplastic) whereas nylon is as thermoplastic essentially without elastomeric properties. Thus the polyetherurethane material is rubbery and more flexible than nylon.

The ultimate tensile strength, S, of the polyetherurethane material is lower than that of nylon 66. This means that a membrane of polyetherurethane, designed to rupture at a given low pressure, for example, between about 500 and 1000 psig for a AA size alkaline cell, would not require as thin a membrane thickness as nylon in order to achieve the target rupture pressure. This is an advantage since at low level membrane thickness, e.g. of the level of about 0.10 mm or smaller it becomes more difficult to mold the membrane. The lower ultimate tensile strength, S, of the polyetherurethane material for the insulating seal disk also means, that for a given target rupture pressure of the rupturable membrane, and given thickness of the membrane, the size of the abutting vent aperture in the metal support disk can be made smaller. This allows inclusion of secondary vent apertures within the structure of metal support disk, without much compromise in the structural integrity of the metal support disk. The presence of secondary vent apertures within the metal support disk affords additional assurance that there will be proper venting of gases from the cell interior in

case the primary vent aperture in the metal support disk becomes plugged. Also, the polyetherurethane material absorbs less water than nylon 66 when exposed to hot humid conditions. This in turn means there is less chance of water entering the cell interior from the external environment when the insulating sealing plug (insulating sealing disk 20) is formed of a polyetherurethane material rather than nylon 66.

The peripheral edge of the insulating sealing disk abuts a portion of the inside surface of the housing. Another important advantage of employing a polyetherurethane material of construction for the insulating seal disk is that after the housing (casing) edge has been crimped over the insulating sealing disk, the peripheral edge of the insulating seal disk stays tightly conformed to the housing surface which it abuts. This is a result of the flexibility or elastomeric properties and softness of the polyetherurethane material. Such uniform surface to surface conformity between the insulating sealing disk edge and the housing edge stays in place over time. This eliminates the need to apply any separate seal coating (e.g. asphalt or polyamide seal coating) between the peripheral edge of the seal disk and inside surface of the housing in order to assure a leak tight surface to surface seal between the insulating sealing disk and housing surface. This of course does not preclude the addition of such seal coating to increase the level of seal protection between the peripheral edge of the insulating seal and the housing. For example, some polyetherurethane may be made harder than the preferred PELLETHANE 2103-80AE and application of such separate seal coating between the insulating sealing disk and housing could be of more benefit in conjunction with the use of such harder polyetherurethane material. The polyetherurethane material may be used advantageously in molding insulating sealing plugs or insulating sealing disks for alkaline cells, regardless of the configuration of any thinned portion or rupturable membrane portion therein.

The metal support disk preferably has a substantially flat central portion with an aperture centrally located therein. Preferably, a pair of diametrically opposed same size apertures are located in the downwardly extending wall of the metal support disk. After the cell active components are inserted the end cap assembly is inserted into the cell's housing open end. The peripheral edge of the metal support disk and peripheral edge of the overlying end cap lie within peripheral edge of the insulating sealing disk. The edge of the housing at its open end is then crimped over peripheral edge of the insulating seal disk. The insulating sealing disk edge in turn simultaneously crimps over both the peripheral edge of the metal support disk and peripheral edge of the overlying end cap locking the end cap and metal support disk securely in place over the insulating sealing disk. Thus, the insulating sealing disk, metal support disk and overlying end cap become locked within the open end of the housing thereby closing the cell housing. Surprisingly, the downwardly extending wall of the insulating disk is maintained in a flush or very nearly flush (contiguous) lie against the downwardly extending wall of the overlying metal support disk even though enough crimping force must be applied during crimping to assure that the peripheral edge of the insulating sealing disk crimps over both the metal support disk edge and the end cap edge holding both edges permanently locked therein. That is, the crimping forces do not disturb the flush or nearly flush lie of the downwardly extending wall of the insulating sealing disk against the overlying downwardly extending wall of the metal support disk.

The end cap assembly of the invention has an elongated anode current collector which has a head that passes through the central aperture in the metal support disk so that it can be welded directly to the underside surface of the end cap. The head of the anode current collector is preferably welded directly to the underside of the end cap by electric resistance welding. There is no other welding of end cap assembly components required. Laser welding need not be employed anywhere in the cell assembly, thereby making the cell assembly process more efficient.

There are several common features in the end cap assembly of the invention and the design shown in commonly assigned U.S. patent 6,887,614 B2 (Duprey) with respect to the orientation of the rupturable membrane abutting an aperture in the metal support disk and the use of a preferred undercut groove in the insulating seal to form the rupturable membrane portion. However, the end cap assembly of the invention represents an improvement over Duprey. In the end cap assembly of the invention the use of an insulating washer between the end cap and cell housing shoulder as shown in Duprey at Fig. 3 and as described therein at col. 9, lines 36-51, has been eliminated. This has resulted in an improved end cap assembly design with fewer components. Instead in the present invention the peripheral edge of the insulating sealing disk is crimped over both the edge of the end cap and the edge of the underlying metal support disk holding both metal support disk and end cap tightly locked in place within the cell housing. This renders the end cap tamper proof, that is, the end cap cannot be readily removed by prying its edge from the cell as when the edge of the end cap is separated from the housing by an insulating washer. The present end cap assembly of the invention also eliminates the need to first weld the anode current collector to the underside of the metal support disk and then weld the metal support disk in turn to the end cap as in Duprey at Fig. 3. In the end cap assembly of the present invention the head of the anode current collector is welded directly to the end cap. There is no welding required between the metal support disk and any other component, thus simplifying cell assembly.

## BRIEF DESCRIPTION OF THE DRAWINGS

The invention will be better understood with reference to the drawings in which:

Fig. 1 is a pictorial cut-away view of the end cap assembly of the invention.

Fig. 1A is an elevational cross sectional view of the bottom portion of the cell.

Fig. 2 is an exploded view showing the components of the end cap assembly of the invention.

Fig. 3 is a top perspective view of the insulating sealing disk.

Fig. 4 is a top perspective view of the metal support disk.

Fig. 5 is a top perspective view of the end cap.

DETAILED DESCRIPTION

A preferred structure of the end cap assembly 14 of the invention is illustrated in Fig. 1. The end cap assembly 14 of the invention has particular applicability to electrochemical cells comprising a cylindrical housing 70 having an open end 15 and opposing closed end 17, wherein the end cap assembly 14 is inserted into said open end 15, to seal the cell. The end cap assembly 14 is particularly applicable to cylindrical alkaline cells of standard AAA (44 x 9 mm), AA (49 x 12 mm), C (49 x 25 mm) and D (58 x 32 mm) size. The end cap assembly 14 is particularly useful for smaller size alkaline cells such as AAA and AA size cell, but may be used advantageously in the C and D size cells as well. Such alkaline cells, as cell 10 (Figs. 1 and 1A), desirably has an anode 140 comprising zinc particles, a cathode 120 comprising $MnO_2$, with electrolyte permeable separator 130 therebetween. The anode 140 and cathode 120 typically comprises an electrolyte of aqueous potassium hydroxide. The anode 140 may comprise zinc particles, the cathode 120 may comprise nickel oxyhydroxide, and the anode and cathode may comprise an electrolyte of aqueous potassium hydroxide.

The end cap assembly 14 of the invention comprises a metal support disk 40, an underlying insulating sealing disk 20, and current collector 80 penetrating through the central aperture 24 of sealing disk 20 and in contact with anode 140. A separate terminal end cap 60 of metal is stacked over the metal support disk 40 as shown in Figs. 1 and 2. After cathode 120, separator 130 and anode 140 are inserted into housing 70, end cap assembly 14 is inserted into the housing open end 15. The peripheral edge 72 of housing 70 is crimped over peripheral edge 28 of insulating sealing disk 20. The peripheral edge 28 of the insulating sealing disk 20 is in turn crimped over both the peripheral edge 66 of the end cap 60 and the edge 49 of the metal support disk 40. In the crimping process radial forces may be applied assuring that the edge 66 of the end cap 60 bites into peripheral edge 28 of the insulating sealing disk 20. The edge 49 of metal support disk 40 may also bite into edge 28 of the insulating sealing disk 20.

The metal support disk 40 (Figs. 1 and 4) preferably has a substantially flat central portion 43 with an aperture 41 centrally located therein. The metal support disk 40 is preferably formed of a disk of single piece metallic construction having a convoluted surface. A portion of the metal support disk 40 has a downwardly sloping wall 45 and there is at least one vent aperture 48 therethrough. Metal support 40 is constructed of a conductive metal having good mechanical strength and corrosion resistance such as nickel plated cold rolled steel, stainless steel, or low carbon steel. The metal support disk 40 is preferably of carbon steel having a convoluted surface of about 0.50 mm thickness. Preferably, a pair of diametrically opposed same size vent apertures 48 are located in the downwardly extending wall 45 of the metal support disk 40 as shown best in Fig. 4. The downwardly extending wall 45 of the metal support disk 40 extends downwardly toward the cell interior from a high point 45a on the wall 45 of said support disk 40 to a low point 45b on said wall 45 when the cell is viewed in vertical position with the end cap assembly 14 on top. The downwardly extending wall 45 of support disk 40 is preferably straight in the direction of downward slope or can have a slightly convex surface contour (outward bulge) when viewed from outside the cell. Downwardly extending surface 45 terminates in peripheral edge 49.

The insulating sealing disk 20 (Fig. 1 and 3) has a convoluted surface including downwardly extending wall 26 wherein a portion of its surface underlies and abuts the aperture 48 in the metal support disk 40 when the cell is viewed in vertical position with the end cap assembly 14 on top. The wall 26 of the sealing disk 20 extends downwardly from a high point 26a on the surface thereof to a low point 26b on the surface thereof when the cell is viewed in vertical position with the end cap assembly 14 on top. Surface 26 of insulating disk 20 is preferably straight in the direction of downward slope (i.e. not bulging in or out) but may also have a slightly convex surface contour when viewed from outside the cell. Downwardly extending surface 26 terminates in upwardly extending peripheral edge 28.

The portion of the downwardly extending surface 26 underlying said aperture 48 in the metal support disk 40 (Fig. 1) has an undercut groove 210 on the inside surface thereof facing the cell interior. The groove 210 has an open end and opposing closed base. The groove base forms a thinned rupturable membrane 23. The rupturable membrane 23 abuts the aperture 48 in the metal support disk 40. When gas pressure within the cell rises, said rupturable membrane

23 penetrates through said aperture 48 and ruptures thereby releasing gas into the head space 18 above the membrane 23, that is, the space between the membrane 23 and overlying end cap 60. The gas then passes to the external environment through vent apertures 65 in end cap 60 (Figs. 1 and 5). Preferably, downwardly extending wall 26 of insulating disk 20 lies flush against the inside surface of downwardly extending wall 45 of metal support disk 40 during assembly. Surprisingly, downwardly extending wall 26 of insulating disk 20 is maintained in a flush or very nearly flush lie against the downwardly extending wall 45 of metal support disk 40 even though enough force must be applied during crimping to assure that the peripheral edge 28 of insulating sealing disk 20 is crimped tightly over both the metal support disk edge 49 and the end cap edge 66. That is, the crimping forces do not dislodge the substantially flush lie of downwardly extending wall 26 of insulating disk 20 against the downwardly extending wall 45 of metal support disk 40. The crimping forces do not create on average more than about 0.50 mm space between the downwardly extending walls 26 and 45, and typically the crimping forces do not create on average more than about 0.35 mm space between the downwardly extending walls 26 and 45. The crimping forces may typically create on average between about 0.1 mm and 0.50 mm space between the downwardly extending walls 26 and 45.

Groove 210 preferably runs circumferentially along the interior side 220 of the downwardly extending wall 26 as shown best in Figs. 1 and 3. The groove 210 forms a thinned portion 23 running preferably circumferentially along the interior side (underside) of downwardly extending wall 26 of insulating sealing disk 20 (Fig. 1). Circumventing groove 210 (Fig. 1) forms a thinned portion, namely, circumventing membrane 23 at the base of groove 210. The thinned portion 23 forms a rupturable membrane which faces and preferably abuts downwardly extending wall 45 of the metal support disk 40 as shown in Fig. 1. There can be one or more apertures 48 in downwardly extending wall 45 of metal support disk 40 (Figs. 1 and 4). Preferably there are two apertures in the surface of downwardly extending wall 45 as shown in Fig. 4. If two apertures 48 are employed they are desirably of about the same size and are located diametrically opposite each on downwardly extending wall 45 (Fig. 4). The portion of the circumventing thinned membrane 23 running directly under vent aperture 48 forms a rupturable portion. When gas within the cell builds up to a predetermined level, the portion of membrane 23 immediately under aperture 48 will stretch into the aperture until it ruptures under tension thereby releasing gas from within the cell. The cell's internal pressure is immediately reduced as the gas escapes to the environment through overlying end cap vent apertures 65.

The opposing groove walls 212a and 212b defining the depth of undercut groove 210 do not have to be of any particular shape of curvature. However, from the standpoint of ease of manufacture the groove walls 212a and 212b can be vertically oriented or may be slanted so that the mouth of groove 210 is wider than the base (rupturable membrane portion 23) of the groove. The angle of 212a does not play a factor in the rupturability of membrane 23, since the membrane is preferably intended to rupture in tension, not in shear. Walls 212a and 212b can be conveniently at right angle to rupturable membrane 23 at the base of groove 210 or can form an obtuse angle with the rupturable membrane 23 as shown in Fig. 1. Alternatively, groove walls 212a and 212b can be formed of flat or curved surface. Desirably, walls 212a and 212b each form flat surfaces forming an obtuse angle, desirably between about 120 and 135 degrees, with rupturable membrane 23 so the open end of the groove 210 is slightly wider than the groove base forming membrane 23. Such preferred embodiment gives circumventing groove 210 a trapezoidal shape as shown in Fig. 1. Such configuration is desirably from the standpoint of ease of manufacture by injection molding and does not effect the rupturability of membrane 23.

The downwardly extending wall 26 and rupturable membrane portion 23 therein is desirably slanted at an acute angle (angle less than 90°) from the cell's central longitudinal axis 190 as illustrated in Figures 1. In such configuration downwardly extending wall 26 and membrane portion 23 therein is not parallel to the cell's central longitudinal axis. Preferably downwardly extending wall 26 is slanted at an acute angle between about 35 and 80 degrees from longitudinal central axis 190 (Fig. 1). Likewise, downwardly extending wall 45 of support disk 40 is preferably slanted at the same acute angle as the downwardly extending wall 26 of seal disk 20, namely between about 35 and 80 degrees from central axis 190. Thus, when the support disk 40 is placed over seal disk 20, the downwardly extending wall 45 of support disk 40 will abut and lie flush against the downwardly extending wall 26 of seal disk 20 and rupturable membrane 23 will abut aperture 48. As above indicated it has been determined that a flush (or very nearly flush) lie of the metal support disk downwardly extending wall 45 against the seal disk downwardly extending wall 26 can be maintained, despite the greater crimping forces needed to crimp the seal edge 28 over both end cap edge 66 and metal support edge 49 simultaneously. The slanted orientation of downwardly extending wall 45 of the metal support disk 40 allows larger diameter apertures 48 to be made in the downwardly extending wall 45 for a given overall height of support disk 40. This in turn allows the membrane 23 of a given small thickness to rupture at lower threshold pressure thereby allowing the cell housing 70 wall thickness to be reduced. Reduction in housing 70 wall thickness increases the cell internal volume available for anode and cathode active material thereby increasing cell capacity.

In the absence of a groove forming a rupturable membrane in the seal, that is, if the entire portion or downwardly sloping wall 26 abutting aperture 48 is of uniform constant thickness and forms the rupturable membrane, the following relationship has been determined to apply approximately between the desired rupture pressure $P_R$, the radius "R" of the vent aperture 48, and thickness "t" of the resulting constant thickness membrane, where "S" is the ultimate tensile

strength of the rupturable material. Even if there is a groove forming rupturable membrane the following formula plays a role in determining rupture pressure.

$$P_r = t/R \times S \qquad (I)$$

Insulating seal disk 20 may be formed of a single piece construction of plastic insulating material. In the embodiment of the end cap assembly 14 shown in Fig. 1 the rupturable membrane 23 within seal disk 20 abuts aperture 48 in metal support disk 40. It has been determined to be advantageous to form insulating seal disk 20 of a polyetherurethane material. Preferred polyetherurethane material may be selected from the PELLETHANE 2103 series polyetherurethane from Dow Chemical Co. The PELLETHANE 2103 series polyetherurethane are thermoplastic materials which exhibit elastomeric properties. The PELLETHANE 2103 series polyetherurethane generally have ultimate tensile strength (ASTM D412 test) less than the ultimate tensile strength of nylon 66 and an ultimate elongation percent (ASTM D412 test) greater than 200 percent, typically greater than 300 percent, which is much greater than nylon 66. (Nylon 66 has an ultimate elongation of about 90 percent.) Such PELLETHANE material is thermoplastic (softens when exposed to heat but returns to its original condition when cooled) and yet exhibits elastomeric properties as well. That is, PELLETHANE material, is an "elastomeric thermoplastic". By contrast nylon is a thermoplastic but does not exhibit elastomeric properties. Thus the term "elastomeric thermoplastic" as used herein shall mean a thermoplastic polymeric material which also has an ultimate elongation greater than about 200 percent, thereby also imparting elastomeric properties to the thermoplastic material.

A preferred polyetherurethane for insulating seal disk 20 is available under the trade designation PELLETHANE 210.3-80AE from Dow Chemical Company. (The 80AE represents 80 shore on the ASTM A shore hardness scale. The E is a medical grade certification designation.) The PELLETHANE 2103-80AE polyetherurethane has an ultimate tensile strength of 5000 psi (34.5 mega Pascal) and an ultimate elongation of 600 percent. Another polyetherurethane which can be used advantageously for insulating seal disk 20 is available under the trade designation PELLETHANE 2103-65D. (The 65D means 65 shore on the ASTM D shore hardness scale.) The PELLETHANE 2103-65D has an ultimate tensile strength of 5750 psi (39.6 mega Pascal) and an ultimate elongation of 360 percent. However, the PELLETHANE 2103-80AE material is somewhat softer than PELLETHANE 2103-65D material and therefore more preferred as a material of construction for seal disk 20. The polyetherurethane material is chemically resistant to alkaline as is nylon. However, the polyetherurethane is a thermoplastic material with elastomeric properties whereas nylon is as thermoplastic essentially without elastomeric properties. The polyetherurethane material is rubbery and more flexible than nylon. For example PELLETHANE 2103-80AE has an ultimate elongation of 600 percent whereas nylon 66 has an ultimate elongation of 90 percent. Thus, by comparison nylon is a rigid thermoplastic.

As above indicated the ultimate tensile strength, S, of the polyetherurethane material is lower than that of nylon. For example, PELLETHANE 2103-80AE polyetherurethane has an ultimate tensile strength of 5000 psi (34.5 mega Pascal) whereas nylon 66 has an ultimate tensile strength of between about 7000 and 11000 psi (48.26 and 75.83 mega Pascal). This means that a polyetherurethane rupturable membrane designed to rupture at a given low pressure, for example, between about 500 and 1000 psig for an AA size alkaline cell, would not require as thin a membrane thickness as nylon in order to achieve such rupture pressure. This results in an advantage in molding the polyetherurethane rupturable membrane compared to nylon, since it becomes more difficult to mold a rupturable membrane of very small thickness, e.g. of the level of 0.1 mm or smaller.

The lower ultimate tensile strength, S, of the polyetherurethane material for insulating seal disk 20 also means (see above Equation I) that for a given target rupture pressure $P_r$ of membrane 23, and given thickness, t, of membrane 23, the abutting vent aperture 48 radius, R, in metal support disk 40 can be made smaller. This allows inclusion of secondary vent apertures 48 within the structure of metal support disk 40, e.g., within downwardly extending wall 45 of metal support disk 40. The presence of secondary vent apertures affords additional assurance that there will be proper venting of gases within the cell interior. That is, in case the primary vent aperture 48 becomes clogged, membrane 23 will nevertheless rupture against another (secondary) vent aperture 48 located within sloping wall 45 of metal support disk 40. Since smaller vent apertures 48 in the metal support disk 40 can be employed when the insulating sealing disk is composed of polyetherurethane material, this results in a stronger metal support disk 40 as compared to the same metal support disk having same number but larger size vent apertures.

Also the polyetherurethane material absorbs less water than nylon 66 when exposed to hot humid conditions. This in turn means there is less chance of water entering the cell interior from the external environment when seal disk 20 is formed of a polyetherurethane material rather than nylon 66. When nylon or other alkaline resistant thermoplastic such as polypropylene is used for insulating sealing disk 20 a sealing coat such as an asphalt or polyamide coating is often applied between the peripheral edge 28a of the sealing disk and inside surface of housing 70 or between the anode current collector 80 and hub 22 of the insulating seal disk 20.

Another important advantage of employing a polyetherurethane such as PELLETHANE 2103-80AE for insulating seal disk 20 is that it eliminates the need to apply any separate seal coating between the peripheral edge 28a of the seal disk 20 and inside surface of casing 70. It also eliminates the need to apply a coating of sealing material between anode current collector 80 and hub 22 of insulating seal disk 20.

The polyetherurethane material available under the PELLETHANE 2103 series from Dow Chemical Co. has been determined to be a preferred series of polyetherurethane material for alkaline cell sealing disk 20. As above indicated the PELLETHANE 2103-80AE has been determined to be the more preferred material within this series for the alkaline cell insulating sealing disk 20. The PELLETHANE 2103 series is a polyetherurethane comprising a tetramethyleneether repeat segment and is thus a polytetramethyleneetherurethane.

Such polytetramethyleneetherurethane can be formed as the reaction product of a tetramethyleneglycol and diisocyanate as follows:

$$HO-[CH_2CH_2CH_2CH_2-O]_m-H \quad + \quad OC{=}N-R-N{=}CO \longrightarrow$$

tetramethyleneglycol    diisocyanate

$$HO-([CH_2CH_2CH_2CH_2-O]_m-CO-NH-R-NH-CO)_n- \qquad (II)$$

polytetramethyleneetherurethane

The degree of softness or hardness of the polytetramethyleneetherurethane may be controlled by varying the number of tetramethylene repeat units "m" in the polyether segment. The diisocyanate may have the group "R" selected from aromatic, aliphatic or cycloaliphatic as given for example in U.S. patent 4,394,491. The molecular weight of the polymer is sufficiently high so that it has useful physical properties. The molecular weight of the polyetherurethane (II) is a function of the number of polytetramethylene segments, m, and the overall number of repeat units, n. A common aromatic diisocyanate which may be employed in the above reaction II is toluene diisocyanate. Another aromatic diisocyanate which may be employed is naphthylene - 1,5 diisocyanate. A common aliphatic diisocyanate which may be employed in the above reaction is hexamethylene diisocyanate. A common cycloaliphatic diisocyanate which may be employed in the above reaction is cyclohexane-1,4 diisocyanate.

The polyether repeat segment in the polyurethane product preferably comprises a tetramethyleneether, that is, formed from employing a tetramethylene glycol as a reactant with the diisocyanate as shown in the above reaction II. Other glycols may be used as reactants, thus leading to other types of ether repeat units, that is, other than the tetramethyleneether unit in the polyurethane product. For example, the glycol used in the above reaction may be selected from ethylene glycol; 1,3-propylene glycol; 1,2- propylene glycol; 1,4-butylene glycol; 1,3-butylene glycol; 1,2-butylene glycol; 1,5-pentane diol; hexane diol; 1,7-heptane diol; glycerol, and 1,1,1-trimethylolpropane. The polyether repeat segment in the polyurethane product may also be formed form a polyalkylene polyether polyol. Such polyols may be prepared from other starting material such as tetrahydrofuran and alkylene oxide tetrahydrofuran copolymers; epihalohydrins such as epichlorohydrin, as well as arylalkylene oxides such as styrene oxide. Other polyols which may be used as reactant with the diisocyanate to form a polyetherurethane product is given in U.S. patent 4,394,491.

Cell Vent Rupture Test and Leakage Tests With Alkaline Cell Employing a Polyetherurethane Sealing Disk

The effectiveness of the employing an insulating sealing disk 20 molded of polyetherurethane material is demonstrated in the following tests. Identical AA size zinc/$MnO_2$ alkaline cells were built as shown in Fig. 1 with end cap assembly 14 configuration as shown in Fig. 2. As such the peripheral edge 28a of insulating sealing disk 20 abutted a portion of the inside surface of housing 70. The sealing disk 20 as shown best in Figs. 2 and 3 was molded of polyetherurethane material available under the trade designation PELLETHANE 2103-80AE, which is a polytetramethyleneetherurethane from Dow Chemical Co. There was a circumferential groove 210 forming rupturable membrane 23 within the seal disk downwardly extending wall 26 as shown in Fig. 1. The width of groove 210 was about .0.5 mm. The rupturable membrane 23 at the base of groove 210 had a thickness of about 0.15 mm. There were two diametrically opposed vent apertures 48 in metal support disk 40 as shown in Fig. 1. For the leakage tests both vent apertures 48 had a diameter of about 1.8 mm.

For the membrane rupture tests the same rupturable membrane 23 thickness of about 0.15 mm was used with a circumferential groove 210 width of about 0.5 mm. There were also two same sized diametrically opposed vent apertures 48. But in some cells the vent aperture diameter were at diameter of 1.0 mm, other cells had both vent apertures 48 at 0.9 mm diameter, and others had both apertures at 0.8 mm diameter.

There were no seal coatings of any type applied to the area between the insulating sealing disk peripheral edge 28a and abutting peripheral edge 72 of casing 70. There was also no seal coatings of any type applied to the area between anode current collector 80 and hub 22 of the insulating sealing disk 20. Cells were tested for proper rupture of membrane 23 as gas pressure within the cell was increased.

In a separate test fresh AA cells were subjected to leakage tests. The AA cells were subjected first to a 12 cycle temperature stress test(TST). The cells were then inspected for leakage. After completion of the 12 cycle temperature stress test the same cells were then subjected to a 12 week ambient test and then inspected again for leakage.

Rupture Vent Pressure

Groups of AA zinc/$MnO_2$ alkaline cells were tested for successful rupture of the above referenced rupture membrane 23 formed of PELLETHANE 2103-80AE material. The rupturable membrane 23 had a thickness of about 0.15 mm. The circumferential groove width 210 was about 0.5 mm. There were two same size diametrically opposed vent apertures 48 in metal support disk 40. In one group of cells the vent aperture 48 diameter was 1.0 mm; in a second group of cells both vent apertures 48 had a diameter of 0.9 mm, and in a third group of cells both vent apertures 48 had diameter at 0.8 mm. The cells was subjected to abusive conditions thereby causing gas pressure within the cell to increase. The gas pressure within the cell was allowed to increase until the PELLETHANE membrane 23 ruptured thereby releasing gas through vent aperture 48. The gas then passed to the environment through apertures 65 in end cap 60. The membrane 23 ruptured successfully when gas pressure within the cell reached an average level of about 1170 psi with the 1.0 diameter vent apertures, an average level of about 1145 psi with the 0.9 mm vent apertures, and an average level of about 1320 psi with the 0.8 vent apertures. The cells were disassembled. It was confirmed from inspection that the portion of membrane 23 which abutted the vent apertures 48 ruptured cleanly without plugging the vent aperture, thus allowing gas from within the cell interior to escape therethrough.

12 Cycle Temperature Stress Test (TST)

Fresh AA cells (Fig. 1) with the sealing disk 20 molded of PELLETHANE 2103-80AE material were subjected to a 12 cycle temperature stress test. There were no separate seal coating applied between the peripheral edge 28a and the inside surface of housing 70. There was also no seal coating applied between the hub 22 of the insulating sealing disk 20 and anode current collector 80. The protocol for each cycle of this test involved subjecting assembled AA cells to heating for 1 hour in an oven maintained at 71° C by forced circulating hot air. The cells were then removed from the oven and placed directly in a freezer. The cells were left in the freezer at -29° C for 1 hour. The cells were removed from the freezer and placed on a table and remained on the table for 1 hour at ambient temperature (21° C). This completed one cycle. The cells were then placed back in the oven at 71° C for 1 hour to begin a new cycle. The cells were subjected in this manner to 12 cycles. At the conclusion of the 12 cycle test protocol, the cells were inspected for leakage.

Of the 7 AA cells tested there was no leakage observable in any of the cells.

12 Week Ambient Test

Following the above 12 cycle temperature stress test (TST) the same cells were then subjected to an additional test, namely a 12 week ambient test. After the cells were subjected to the 12 cycle temperature stress test the same cells were then left out in open ambient air at about 21° C for one week duration. The cells were then inspected for leakage.

Of the 7 AA cells tested there was no leakage observable in any of the cells. These results show the effectiveness of the polyetherurethane material as a material of construction for the sealing disk. In particular these results are impressive, since as above indicated there were no seal coatings of any kind applied to the area between the sealing disk 20 and casing 70 or between the anode current collector 80 and hub 22 of the sealing disk. The very effective sealing properties of the polyetherurethane material (PELLETHANE 2103-80AE) is attributed to a number of properties of this material which are present in combination. Firstly the material is resistant to attack by alkaline electrolyte. The material unlike nylon or polypropylene has elastomeric properties. The elastomeric properties of the polyetherurethane insulating sealing disk 20 allow for a lasting conformal surface to surface fit between the peripheral edge 28a of the insulating seal disk 20 and the edge 72 of housing 70 upon crimping housing casing edge 72 over the edges of the insulating sealing disk 20 and end cap 60. That is, since the polyetherurethane (PELLETHANE 2103-80AE) material has elastomeric properties and has a relatively soft texture the surface to surface contact and fit between insulating sealing disk edge 28a and casing edge 72 does not loosen or weaken once the casing edge 72 is crimped over sealing disk edge 28a. Thus, alkaline electrolyte is not able to penetrate the area between the insulating sealing disk and casing, even though the cell was subjected to the above two back to back leakage tests.

In this respect the elastomeric properties of the polyetherurethane sealing disk appears to have an advantage over alkaline cell sealing disks formed of conventional nylon or polypropylene which is more rigid and thus more apt to

separate in time from close, uniform contact with casing edge 72. As a result of the elastomeric properties of an insulating sealing disk 20 formed of polyetherurethane (PELLETHANE 2103-80AE) as demonstrated in the above tests, a tight conformal surface to surface fit between the insulating sealing disk edge 28a and the casing edge 72 is maintained even though there is no separate seal coating applied between these two surfaces. This of course does not preclude the use of such separate seal coating for added protection against leakage. For example, a seal coating of asphalt or polyamide coating or other sealing coating may nevertheless be applied between the sealing disk edge 28a and casing edge 72 for additional protection against leakage. Such seal coating may be beneficial when employing other grades of polyetherurethane material such as PELLETHANE 2103-65D, which is not quite as soft and elastomeric as PELLETHANE 2103-80AE.

The polyetherurethane material as described herein has been applied, by way of example, to a specific embodiment of the insulating seal disk 20 as shown in Figs. 1, 2 and 3. This insulating seal disk 20 has a circumferential groove 210 with thinned region of remaining material at the base of the groove forming rupturable membrane 23. There are disclosed in the art other configurations of alkaline cell insulating sealing disks which contain thinned portion forming the rupturable membrane in the form of slits or grooves within the insulating disk as shown, for example, in U.S. patent 4,237,203 and U.S. 6,991,872. Such thinned portions or rupturable membranes within the insulating disk are designed to rupture when gas pressure within the cell builds to a predetermined level. A pointed or other protruding member can be oriented above the rupturable membrane to assist in rupture of the membrane as shown in U.S. patent 3,314,824. The rupturable membrane can be in the form of one or more "islands" of thin material within the insulating disk as shown in U.S. 4,537,841; U.S. U.S. 5,589,293; and U.S. 6,042,967.

The polyetherurethane material as described herein may be used to mold or form alkaline cell insulating disks regardless of whether the rupturable membrane portion therein is of a grooved or slit configuration or of the "island" type configuration. Thus, it is not intended that polyetherurethane material be limited to application to any particular alkaline cell insulating sealing disk configuration or to any particular shape or configuration for any thinned portion forming a rupturable membrane therein. For example, the housing surface 70 and sealing disk may be of oblong or elliptical configuration instead of cylindrical, or it may be of prismatic or cuboid shape. The grooves 210 and underlying thinned portions forming the rupturable membrane 23 in the insulating sealing disk 20 may be of the island type or they may be circumferential or segmented. If segmented (discontinuous) grooves and underlying thinned portion 23 in the sealing disk 20 are employed they may be straight, arcuate or curvilinear in shape. The polyetherurethane material herein described can be advantageously used to mold or form insulating sealing disks for alkaline cells, regardless of the shape or configuration of the disk or any thinned portion therein forming a rupturable membrane. The polyetherurethane material could possibly also be useful in forming insulating sealing disks for other cell types, for example, cells having a lithium or lithium alloy anode. Such cells employ nonaqueous electrolytes comprising a lithium salt dissolved in an organic electrolyte. The extent of the usefulness of the polyetherurethane material for sealing disks of such nonaqueous cells would be determined by experimentation, to assure compatibility between the polyetherurethane material and the electrolyte.

As illustrated best in Figs. 1 and 3, insulating disk 20 has a central boss or hub 22 with aperture 24 through the center thereof. Boss 22 forms the thickest and heaviest portion of disk 20. The peripheral edge of boss 22 terminates in downwardly extending wall 26 which extends downwardly from a high point 26a on said wall 26 to a low point 26b thereon when the cell is viewed in vertical position with the end cap assembly on top (Figs. 1 and 3). Similarly, the peripheral edge of the center portion 43 of support disk 40 terminates in downwardly extending wall 45 from a high point 45a on said wall 45 to a low point 45b thereon (Figs. 1 and 4).

The above described insulating seal disk 20 configuration also places the rupturable membrane 23 closer to the end cap 60. This means that there is more internal space available within the cell for active materials. Location of the rupturable membrane 23 on downwardly extending wall 26 of the insulating disk 20 permits gas and other internal components to pass unobstructed from the cell interior through aperture 48 in the metal support disk, then directly out to the environment through apertures 65 in the end cap 60 after membrane 23 ruptures. Such passage of gas from the cell interior to the environment is unobstructed even when the cell is connected to another cell or a device being powered.

It has been possible to reduce cell gassing through use of multiple gassing inhibitors. It is desirable to have the aperture 48 radius large and the thickness of the constant thickness membrane as small as possible. This allows rupture of the membrane if desired at lower threshold pressures, P, of gas buildup in the cells. Thus for a given cell size, there is a practical lower limit to the burst pressure determined by a maximum aperture radius and minimum membrane thickness achievable. The addition of an undercut groove 210 forming a rupturable membrane provides additional variables, such as groove depth and width, with which to manipulate the burst pressure to lower levels.

In the end cap assembly 14 the ratio of the rupturable membrane width (that is, the width of the base of groove 210) to the thickness of the rupturable membrane 23 is typically between about 2.5 to 1 and 12.5 to 1. The design of the end cap assembly 14 can accommodate an aperture 48 typically as large as between about 1.8 and 10 mm (circular diameter) in downwardly slanted wall 45 of metal support disk 40, for common cell sizes between AAA and D size cells.

The following lower level rupture pressures for membrane 23 are desirable in connection with the end cap

assembly 14 of the invention. For AAA alkaline cells the target rupture pressure of membrane 23 is desirably between about 900 to 1800 psig (6.21 mega Pascal and 12.41 mega Pascal gage). For AA alkaline cells the target rupture pressure of membrane 23 is desirably between about 500 to 1500 psig (3.45 mega Pascal and 10.34 mega Pascal gage). For C size alkaline cells the target rupture pressure for membrane 23 is desirably between about 300 and 550 psig (2.07 mega Pascal and 3.79 mega Pascal gage). For D size alkaline cells the target rupture pressure for membrane 23 is desirably between about 200 and 400 psig (1.38 mega Pascal and 2.76 mega Pascal gage). Such rupture pressure ranges are intended as non limiting examples. It will be appreciated that the end cap assembly 14 is not intended to be limited to these rupture pressure ranges as the present end cap assembly 14 can be employed as well with higher and even lower rupture pressures.

With the above indicated rupture pressures ranges for the given cell size, housing 70 of nickel plated steel may typically have a small wall thickness, desirably between about 0.006 and 0.012 inches (0.15 and 0.30 mm), preferably between about 0.006 and 0.008 inches (0.15 and 0.20 mm) for the AA and AAA, and between about 0.010 and 0.012 inches (0.25 and 0.30 mm) for the C and D. The smaller wall thickness for housing 70 is desired, since it results in increased internal volume of the cell permitting use of more anode and cathode material, thereby increasing the cell's capacity. The end cap assembly 14 permits the above described rupture pressures to be achieved for the given cell size, and has an additional feature that the end cap 60 is "tamper proof". That is, since the edge 66 of end cap 60 is crimped under the peripheral edge 28 of insulating sealing disk 20, it cannot be readily pried away from the end cap assembly. Thus, in the present end cap assembly 14 design, the cell contents as well are very secure and well protected against malicious tampering. Additionally, in the end cap assembly 14 of the invention the head 87 of anode current collector nail 80 is welded directly to the underside of end cap 60. This can be achieved by simple electric resistance welding. In the present end cap assembly 14 there is no need for welding of any other cell components, and there is no need for laser welding, thus simplifying cell construction.

In order to allow for the use of larger size apertures 48 in the context of end cap assembly herein described, it has been determined that this can be achieved best by orienting the insulating seal wall 26 containing rupturable membrane 23 at a slant, that is, not parallel to the longitudinal axis 190. Preferably, seal wall 26 and abutting metal support surface 45 are slanted downwardly at an angle, preferably between about 35 and SO degrees from the central longitudinal axis 190. This provides more available surface area from which to form aperture 48.

In keeping with the desire to reduce the burst pressure of the cell, it has been determined that this can be achieved by forming an undercut groove 210 on the inside surface of downwardly sloping wall 26 of sealing disk 20. Such undercut groove 210 can be formed, for example, circumventing the center of sealing disk 20, during injection molding at the time of forming the sealing disk 20.

In a preferred embodiment employing an AA size alkaline cell, by way of nonlimiting example, the rupturable membrane 23 can be designed to rupture when gas within the cell builds up to a level of between about 500 to 1500 psig (3.45 mega Pascal and 10.34 mega Pascal gage). The rupturable membrane portion 23 underlying apertures 48 in metal support disk 40 is advantageously formed of a polyetherurethane material, e.g. PELLETHANE 2103-80AE from Dow Chemical Co. as above indicated. Groove 210 can have a width between about 0.08 and 1 mm, desirably between about 0.08 and 0.8 mm. Groove 210 preferably runs circumferentially around the inside surface 220 of Downwardly extending wall 26 of insulating disk 20. A segment of circumferential groove 210 runs immediately under apertures 48 in metal support disk 40. Alternatively, the groove 210 need not be circumventing but can be formed iso that individual grooves are cut immediately under apertures 48 with the portions of the inside surface of wall 26 therebetween left smooth and uncut. The apertures 48 can be of circular shape having a diameter of between about 1.8 and 10 mm, corresponding to an area of between about 2.5 and 78.5 $mm^2$, typically between 2 and 9 mm (circular diameter), corresponding to an area between about 3.1 and 63.6 $mm^2$, for common cell sizes between AAA and D size cells. It should be recognized that apertures 48 can be of other shape such as oblong or elliptical. Apertures 43 can also be of rectangular or polygonal shape or irregular shapes comprising a combination of straight and curved surfaces. The effective diameter of such oblong or polygonal shape or other irregular shape is also desirably between about -2 and 9 mm. The effective diameter with such shapes can be defined as the minimum distance across any such aperture.

When the target rupturable pressure is between about 500 to 1500 psig (3.45 and 10.34 mega Pascal gage) for an AA cell or between about 900 to 1800 psig (6.21 and 12.41 mega Pascal gage) for an AAA size cell, the ratio of the groove width (width of membrane 23 at base of groove) to the thickness of rupturable membrane 23 is desirably between about 2.5:1 and 12.5:1. In keeping with this range of ratio, the groove width at the base of the groove is desirably between about 0.1 and 1 mm, preferably between about 0.4 and 0.7 mm and the thickness of rupturable membrane 23 is between about 0.08 and 0.25 mm, desirably between about 0.10 and 0.20 mm. The apertures 48 have can have a diameter typically between about 1.8 and 4.5 mm, corresponding to an area between about 2.5 and 16 $mm^2$.

When C and D alkaline cells are employed rupturable membrane 23 is desirably designed to rupture at lower pressures. For example, for C size cells the target rupture pressure may be between about 300 and 550 psig (2.07 and 3.79 mega Pascal gage). For D size cells the target rupture pressure may be between about 200 and 400 psig (1.38 and 2.76 mega Pascal gage). The same ratio of the groove width (width of membrane 23 at base of groove) to the

thickness of rupturable membrane 23 is desirably between about 2.5:1 and 12.5:1 is also applicable.

In general irrespective of cell size, it is desirable to maintain a ratio of the thickness of the rupturable membrane 23 to the thickness of downwardly extending seal wall 26 immediately adjacent membrane 23 to be 1:2 or less, desirably between about 1:2 and 1:10, more typically between about 1:2 and 1:5. In such embodiment the rupturable membrane 23 thickness is desirably between about 0.08 and 0.25 mm, preferably between about 0.1 and 0.2 mm. The apertures 48 through which the membrane 23 ruptures desirably have a diameter between about 1.8 and 10 mm.

In assembly after the anode 140, cathode 120 and separator 130 are inserted into the cell housing 70, the end cap assembly 14 is inserted into the housing open end 14. The metal support disk 40 may first be pressed onto the insulating sealing disk 20 so that the top surface 43 of the boss 22 of sealing disk 20 penetrates into central aperture 41 of metal support disk 40. The downwardly extending wall 26 of the insulating disk 20 lies flush against the inside surface of downwardly extending wall 45 of the overlying metal support disk 40. The insulating sealing disk 20 with metal support disk 40 contained therein may then be inserted into the open end 15 of housing 70. The lower portion of the insulating seal peripheral edge 28 rests on circumferential bead 73 in the cell housing side wall 74. The head 87 of current collector nail 80 is welded, preferably by electric resistance welding, to the underside of end cap 60.

The current collector 80 is then inserted through aperture 41 in the metal support disk 40 and then through underlying central aperture 24 in the insulating sealing disk 20 until the tip 84 of the current collector penetrates into the anode 140 material. The underside of the attached end cap 60 comes to rest against the top flat surface 43 surrounding aperture 41 of metal support disk 40. Both edges 49 of the metal support disk 40 and edge 66 of the overlying end cap 60 lie within peripheral edge 28 of insulating sealing disk 20 as shown in Fig. 1. The edge 72 of the housing 70 is then crimped over peripheral edge 28 of the insulating seal disk 20. The insulating sealing disk edge 28 in turn crimps over both edge 49 of the metal support disk 40 and edge 66 of end cap 60 locking the end cap 60 and underlying metal support disk 40 securely in place over the insulating sealing disk 20. Thus, the insulating sealing disk 20, metal support disk 40 and overlying end cap 60 become locked within the open end 15 of the housing thereby closing the cell housing. Radial compressive forces may be applied to housing 70 during crimping to assure that the peripheral edge 66 of end cap 60 bites into the peripheral edge 28 of the insulating sealing disk 20 and that the metal support disk edge 49 becomes radially compressed thereby helping to achieve a tight seal. The edge of 66 of the end cap 60 is not accessible and thus the end cap 60 is considered to be tamper proof, that is, cannot be readily pried away from the cell assembly.

In another embodiment of the sealing disk 20, the disk configuration can be the same as shown in Fig. 1 and Fig. 3 except that groove 210 can be formed by cutting or stamping a die or knife edge, with or without the aid of a heated tool, into the underside 220 of downwardly extending wall 26 of sealing disk 20 after the disk is formed. In such embodiment the sealing disk 20 can be first formed by molding to obtain a downwardly extending wall 26 of uniform thickness, that is, without groove 210. A die having a circumferential cutting edge can then be applied to the underside surface 220 of the sealing disk downwardly extending wall 26. A circumferential or arcuate cut forming groove 210 of width less than 1 mm, desirably between about 0.08 and 1 mm, preferably between 0.08 and 0.8 mm can be made in this manner to the underside surface 220 of downwardly extending wall 26 of sealing disk 20. Groove 210 forms the rupturable membrane 23 at the base of groove. The rupturable membrane 23 formed by groove 210 forms a weak area in the surface of downwardly extending wall 220 of the sealing disk. Groove 210 can be made by the use of a cutting die, e.g., a die having a raised edge (knife edge) which is pressed onto the underside of downwardly extending wall 26. The groove 210 made in this manner allows the membrane 23 at the base of groove 210 to be formed thinner than if the groove 210 is molded into downwardly extending wall 26. Groove 210 formed by a cutting die can thus result in a rupturable membrane 23 of very small width and very small thickness. The membrane 23 formed by groove cut 210 (Fig. 1) can be designed to rupture at the desired target pressure by adjusting the depth the cut, which in turn forms a rupturable membrane 23 of a desired thickness at the base of the cut.

The membrane 23 formed by groove cut 210 abuts the underside of downwardly extending wall 45 of metal support disk 40. A portion of membrane 23 can underlie one or more apertures 48 in downwardly extending wall 45 of metal support disk 40 in the same manner as described with respect to the embodiment shown in Fig. 1. It will be appreciated that groove cut 210 (Figs. 1 and 3) does not have to be in the shape of continuous closed circle, but can be an arcuate segment, preferably long enough so that the portion of groove 210 underlying aperture 48 is continuous over the width of aperture 48. That is, groove 210 does not have to extend to portions 220 (Fig. 1) of the downwardly extending wall 26 not overlaid by aperture 48.

In a specific embodiment, by way of a non limiting example, irrespective of cell size, the sealing disk 20 can be of polyetherurethane, e.g. PELLETHANE 21.03-80AE, and the groove cut 210 can have a width, typically between about 0.08 and 1.0 mm, preferably between about 0.08 and 0.8 mm. The membrane 23 formed at the base of the groove cut can have a thickness such that the ratio of the membrane 23 thickness to the thickness of the downwardly extending wall 26 immediately adjacent groove 210 is between about 1:10 and 1:2, preferably between about 1:5 to 1:2. In such embodiment the rupturable membrane 23 thickness may typically be between about 0.08 and 0.25 mm, desirably between about 0.1 and 0.2 mm.

The combination of membrane 23 thickness, and aperture 48 size may be adjusted depending on the ultimate

tensile strength of the material employed and level of gas pressure at which rupture is intended. It has been determined to be adequate to employ only one aperture 48 and corresponding one rupturable membrane 23. However, downwardly extending wall 45 in metal support disk 40 may be provided with a plurality of comparably sized apertures with one or more abutting underlying rupturable membrane portions 23. Preferably, two diametrically opposed apertures 48 in metal surface 45 can be employed as shown in Fig. 4. This would provide additional assurance that membrane rupture and venting would occur at the desired gas pressure.

The following is a description of representative chemical composition of anode 140, cathode 120 and separator 130 for an alkaline cell 10 which may employed irrespective of cell size. The following chemical compositions are representative basic compositions for use in cells having the end cap assembly 14 of the present invention, and as such are not intended to be limiting.

In the above described embodiments a representative cathode 120 can comprise manganese dioxide, graphite and aqueous alkaline electrolyte; the anode 140 can comprise zinc and aqueous alkaline electrolyte. The aqueous electrolyte comprises a conventional mixture of KOH, zinc oxide, and gelling agent. The anode material 140 can be in the form of a gelled mixture containing mercury free (zero-added mercury) zinc alloy powder. That is, the cell can have a total mercury content less than about 50 parts per million parts of total cell weight, preferably less than 20 parts per million parts of total cell weight. The cell also preferably does not contain any added amounts of lead and thus is essentially lead-free, that is, the total lead content is less than 30 ppm, desirably less than 15 ppm of the total metal content of the anode. Such mixtures can typically contain aqueous KOH electrolyte solution, a gelling agent (e.g., an acrylic acid copolymer available under the tradename CARBOPOL C940 from B.F. Goodrich), and surfactants (e.g., organic phosphate ester-based surfactants available under the tradename GAFAC RA600 from Rhône Poulenc). Such a mixture is given only as an illustrative example and is not intended to restrict the present invention. Other representative gelling agents for zinc anodes are disclosed in U.S. Patent No. 4,563,404.

The cathode 110 can desirably have the following composition:

87-93 wt% of electrolytic manganese dioxide (e.g., Trona D from Kerr-McGee), 2-6 wt% (total) of graphite, 5-7 wt% of a 7-10 Normal aqueous KOH solution having a KOH concentration of about 30-40 wt%; and 0.1 to 0.5 wt% of an optional polyethylene binder. The electrolytic manganese dioxide typically has an average particle size between about 1 and 100 micron, desirably between about 20 and 60 micron. The graphite is typically in the form of natural, or expanded graphite or mixtures thereof. The graphite can also comprise graphitic carbon nanofibers alone or in admixture with natural or expanded graphite. Such cathode mixtures are intended to be illustrative and are not intended to restrict this invention.

The anode material 150 comprises: Zinc alloy powder 62 to 69 wt% (99.9 wt% zinc containing 200 to 500 ppm indium as alloy and plated material), an aqueous KOH solution comprising 38 wt% KOH and about 2 wt% ZnO; a cross-linked acrylic acid polymer gelling agent available commercially under the tradename "CARBOPOL C940" from B.F. Goodrich (e.g., 0.5 to 2 wt%) and a hydrolyzed polyacrylonitrile grafted onto a starch backbone commercially available commercially under the tradename "Waterlock A-221" from Grain Processing Co. (between 0.01 and 0.5 wt.%); dionyl phenol phosphate ester surfactant available commercially under the tradename "RM-510" from Rhone-Poulenc (50 ppm). The zinc alloy average particle size is desirably between about 30 and 350 micron. The bulk density of the zinc in the anode (anode porosity) is between about 1.75 and 2.2 grams zinc per cubic centimeter of anode. The percent by volume of the aqueous electrolyte solution in the anode is preferably between about 69.2 and 75.5 percent by volume of the anode. The cell can be balanced in the conventional manner so that the mAmp-hr capacity of $MnO_2$ (based on 308 mAmp-hr per gram $MnO_2$) divided by the mAmp-hr capacity of zinc alloy (based on 820 mAmp-hr per gram zinc alloy) is about 1.

The separator 130 can be a conventional ion porous separator consisting of cellulosic material. Separator may have an inner layer of it nonwoven material of cellulosic and polyvinylalcohol fibers and an outer layer of cellophane. Such a material is only illustrative and is not intended to restrict this invention. Current collector 80 is brass, preferably tin plated or indium plated brass to help suppress gassing.

## Claims

1. An electrochemical cell (10) comprising a housing (70) having an open end (15) an opposing closed end (17) and side wall (26) therebetween and an insulating sealing plug (20) inserted into the open end (15) of said housing (70) closing said open end (15) said cell (10) having a positive and a negative terminal and an aqueous alkaline electrolyte, **characterised in that** said insulating sealing plug (20) comprises polyetherurethane material.

2. The cell of claim 1 wherein said insulating sealing plug (20) comprises polytetramethyleneetherurethane material.

3. The cell of claim 1 wherein said insulating sealing plug (20) has an elongated electrically conductive current collector (80) passing therethrough, the current collectoor (80) being in electrical contact with a cell terminal.

4. The cell of claim 1 wherein said housing (70) has a surface facing the cell interior and said insulating sealing plug (20) comprises a peripheral edge (28) abutting a portion of said housing surface and there is no seal coating applied between the peripheral edge (28) a of said insulating plug and said housing surface.

5. The cell of claim 1 wherein said polyetherurethane is an elastomeric thermoplastic material.

6. The cell of claim 5 wherein said elastomeric thermoplastic material has an ultimate percent elongation greater than about 200 percent.

7. The cell of claim 1 wherein said polyetherurethane material has an ultimate tensile strength less than thy ultimate tensile strength of nylon 66 and an ultimate elongation of greater than 200 percent.

8. The cell of claim 1 wherein said insulating sealing plug (20) comprising a thinned portion integrally formed therein, said thinned portion forming a rupturable membrane (23) which ruptures when gas pressure within the cell rises, wherein said rupturable membrane (23) comprises a polyetherurethane material.

**Patentansprüche**

1. Elektrochemische Zelle (10), die ein Gehäuse (70) mit einem offenen Ende (15), einem entgegengesetzten geschlossenen Ende (17) und einer dazwischen gelegenen Seitenwand (26) umfasst und einen isolierenden Verschlussstopfen (20), der in das offene Ende (15) des Gehäuses (70) eingeführt ist und dadurch das offene Ende (15) verschließt, wobei die Zelle (10) einen Pluspol und einen Minuspol und einen wässrigen alkalischen Elektrolyten aufweist und ferner **dadurch gekennzeichnet ist, dass** der isolierende Verschlussstopfen (20) Polyetherurethanmaterial umfasst.

2. Zelle aus Anspruch 1, wobei der isolierende Verschlussstopfen (20) Polytetramethylenetherurethanmaterial umfasst.

3. Zelle aus Anspruch 1, wobei durch den isolierenden Verschlussstopfen (20) ein verlängerter, elektrisch leitfähiger Stromabnehmer (80) hindurch läuft, wobei der Stromabnehmer (80) in elektrischem Kontakt mit einem Zellenanschluss steht.

4. Zelle aus Anspruch 1, wobei die Oberfläche des Gehäuses (70) dem Inneren der Zelle zugewandt ist und der isolierende Verschlussstopfen (20) einen Außenrand (28) aufweist, der an einen Abschnitt der Gehäuseoberfläche anstößt und wobei zwischen dem Außenrand (28) des isolierenden Verschlussstopfens und der Gehäuseoberfläche keine Abdichtungsbeschichtung aufgetragen ist.

5. Zelle aus Anspruch 1, wobei das Polyetherurethan ein elastomeres Thermoplastmaterial ist.

6. Zelle aus Anspruch 5, wobei das elastomere Thermoplastmaterial eine prozentuale Bruchdehnung von über etwa 200 Prozent aufweist.

7. Zelle aus Anspruch 1, wobei das Polyetherurethanmaterial eine Zugfestigkeit aufweist, die geringer ist als die Zugfestigkeit von Nylon 66, sowie eine Bruchdehnung von über 200 Prozent.

8. Zelle aus Anspruch 1, wobei der isolierende Verschlussstopfen (20) einen darin angeformten ausgedünnten Abschnitt aufweist, wobei der ausgedünnte Abschnitt eine zerreißbare Membran (23) bildet, die zerreißt, wenn der Gasdruck innerhalb der Zelle ansteigt, wobei die zerreißbare Membran (23) ein Polyetherurethanmaterial umfasst.

**Revendications**

1. Cellule électrochimique (10) comprenant un logement (70) ayant une extrémité ouverte (15) une extrémité fermée opposée (17) et une paroi latérale (26) entre elles et un raccord d'étanchéité isolant (20) inséré dans l'extrémité ouverte (15) dudit logement (70) fermant ladite extrémité ouverte (15), ladite cellule (10) ayant une borne positive

et une borne négative et un électrolyte alcalin aqueux, **caractérisée en ce que** ledit raccord d'étanchéité isolant (20) comprend un matériau de polyéther-uréthane.

2. Cellule selon la revendication 1, dans laquelle ledit raccord d'étanchéité isolant (20) comprend un matériau de polytétraméthylène-étheruréthane.

3. Cellule selon la revendication 1, dans laquelle ledit raccord d'étanchéité isolant (20) a un collecteur de courant électriquement conducteur allongé (80) qui passe à travers, le collecteur de courant (80) étant en contact électrique avec une borne de la cellule.

4. Cellule selon la revendication 1, dans laquelle ledit logement (70) a une surface faisant face à l'intérieur de la cellule et ledit raccord d'étanchéité isolant (20) comprend un bord périphérique (28) venant en butée avec une partie de ladite surface du logement et il n'y a aucun revêtement d'étanchéité appliqué entre le bord périphérique (28) dudit raccord isolant et ladite surface du logement.

5. Cellule selon la revendication 1, dans laquelle ledit polyéther-uréthane est un matériau thermoplastique élastomère.

6. Cellule selon la revendication 5, dans laquelle ledit matériau thermoplastique élastomère a un pourcentage d'allongement à la rupture supérieur à environ 200 pour cent.

7. Cellule selon la revendication 1, dans laquelle ledit matériau de polyéther-uréthane a une résistance à la traction inférieure à la résistance à la traction du nylon 66 et un allongement à la rupture supérieur à 200 pour cent.

8. Cellule selon la revendication 1, dans laquelle ledit raccord d'étanchéité isolant (20) comprend une partie amincie formée en une seule pièce dedans, ladite partie amincie formant une membrane frangible (23) qui se rompt lorsque la pression de gaz au sein de la cellule augmente, dans laquelle ladite membrane frangible (23) comprend un matériau de polyéther-uréthane.

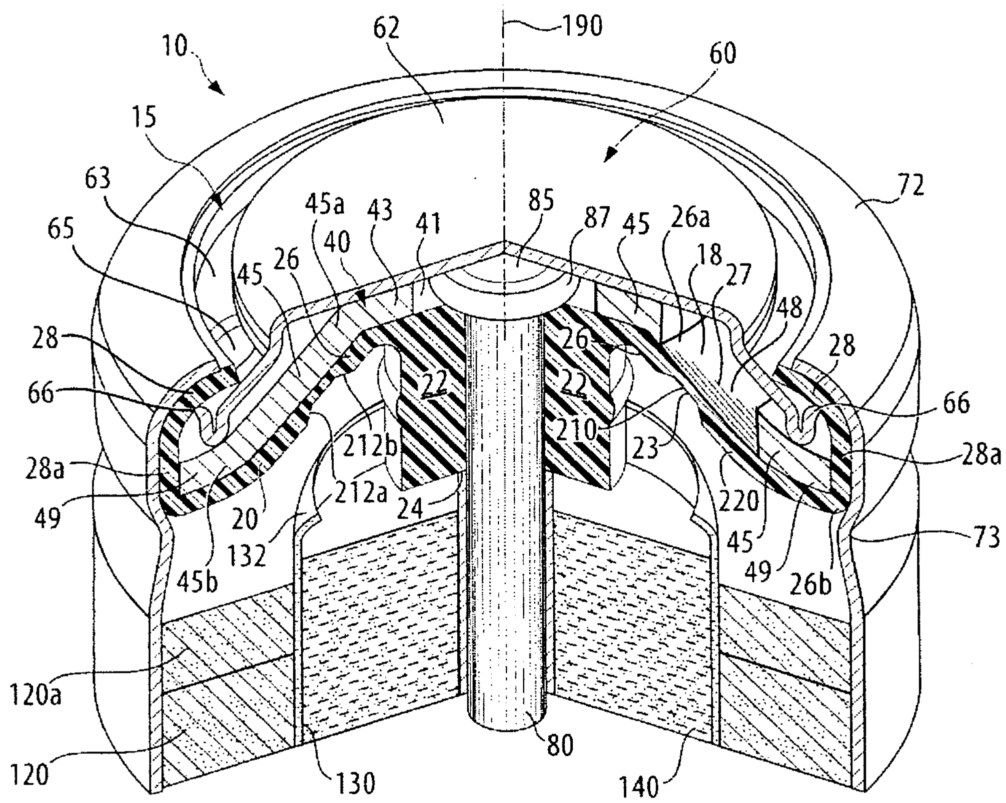
190
10
62
60
15
63
72
65
45a
43
41
85
87
45
26a
45
26
40
18
27
48
28
26
28
66
22
22
66
212b
210
23
28a
28a
49
20
212a
24
220
132
45
73
45b
49
26b
120a
120
130
80
140

Fig. 1

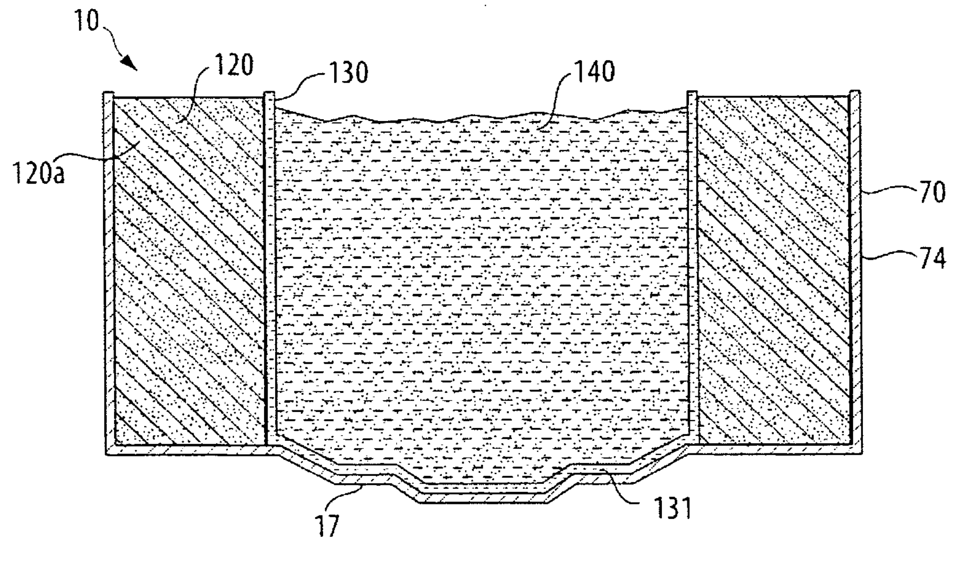
10
120
130
140
120a
70
74
17
131

Fig. 1A

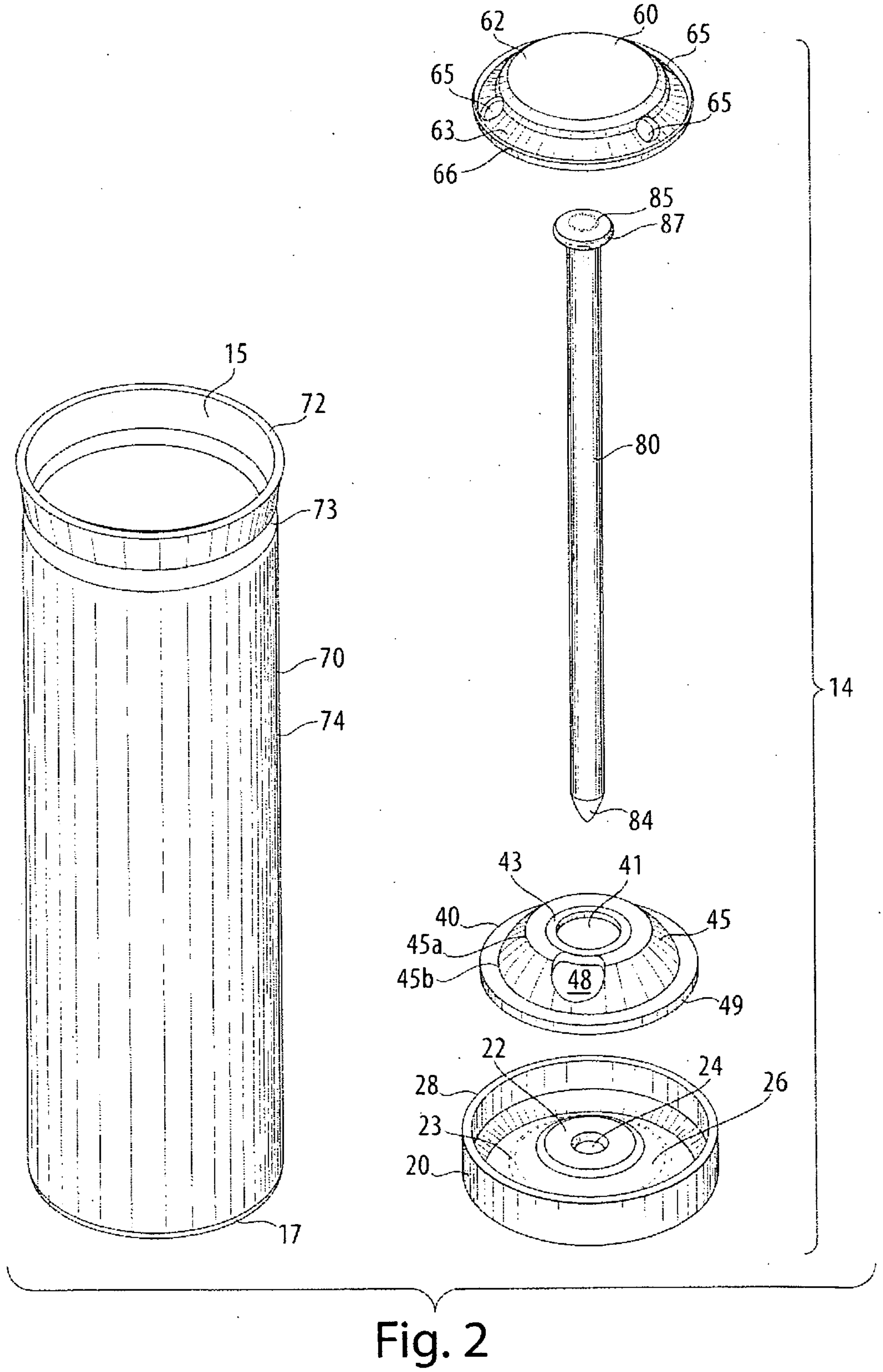
62
60
65
65
65
63
66
85
87
80
84
15
72
73
70
74
17
14
43
41
40
45
45a
45b
48
49
22
24
28
26
23
20

Fig. 2

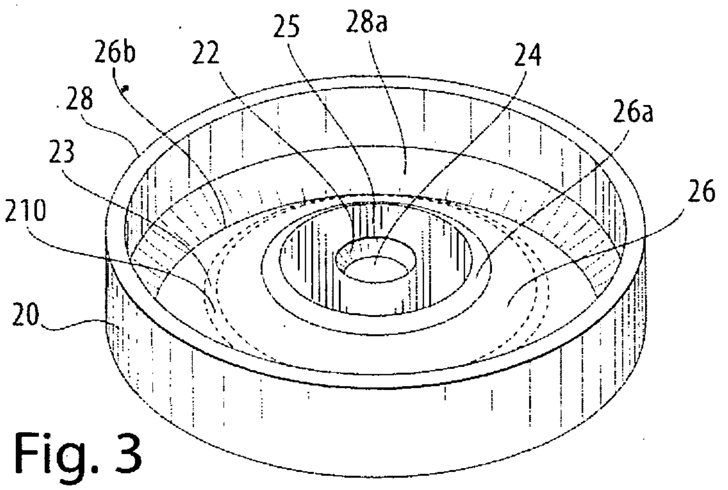


Fig. 3

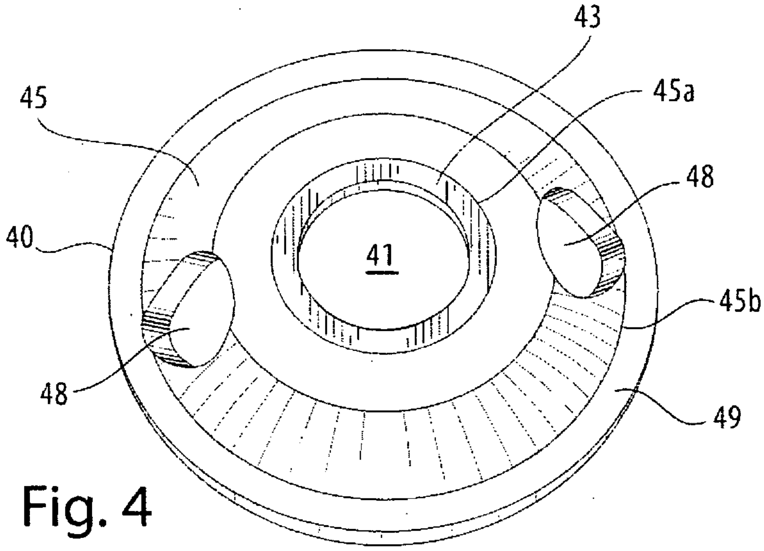


Fig. 4

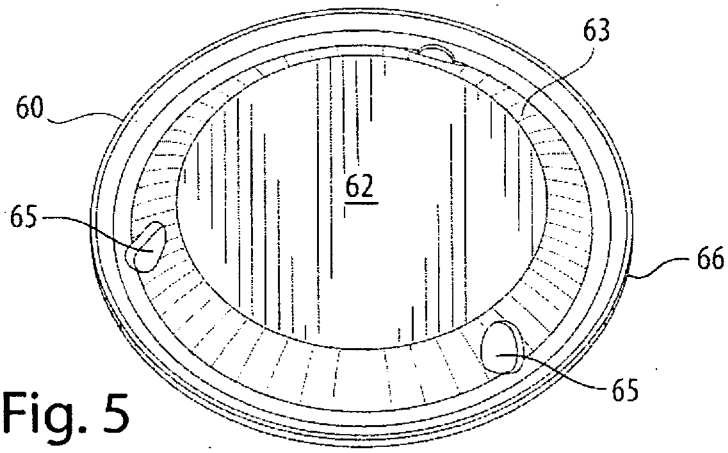


Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 3617386 A
- US 5759713 A
- US 5080985 A
- US 5589293 A
- US 4227701 A
- US 6127062 A
- US 6887614 B2
- US 6887614 B
- US 4537841 A
- US 6042967 A
- US 6991872 B
- US 4237203 A
- US 20020127470 A1
- US 3314824 A
- WO 0046864 A
- US 4394491 A
- US 4563404 A